# EUROPÄISCHE PATENTANMELDUNG

(11) **EP 2 556 944 A2**
(43) Veröffentlichungstag der Anmeldung: **13.02.2013**
(21) Anmeldenummer: 12171620.3
(22) Anmeldetag: 12.06.2012
(51) Int. Cl.: B29C 49/48, B29C 49/36

(54) **Vorrichtung und Verfahren zum Blasformen von Behältern**

(30) Priorität: 11.08.2011 DE 102011080833
(71) Anmelder: Krones AG, 93073 Neutraubling (DE)
(72) Erfinder: Führer, Kaj, 93105 Tegernheim (DE)
(74) Vertreter: Grünecker, Kinkeldey, Stockmair & Schwanhäusser

(57) **Zusammenfassung**

Es wird eine Vorrichtung und ein Verfahren zum Blasformen von Behältern beschrieben, wobei die Vorrichtung eine Mehrzahl von mit jeweils wenigstens einer Blasform versehenen Blasstationen enthält, die auf einem angetriebenen Träger, insbesondere einem Blasrad angeordnet sind. Die Blasstationen werden über eine Temperiereinrichtung mit Betriebsmedium versorgt. Für eine konstruktive Vereinfachung und optimierte Steuerung wird vorgeschlagen, die Temperiereinrichtung auf dem Träger mitlaufend anzuordnen.

## Beschreibung

Die Erfindung bezieht sich auf eine Vorrichtung und ein Verfahren zum Blasformen von Behältern der in den Oberbegriffen der Ansprüche 1 und 11 beschriebenen Art.

Blasmaschinen/Streckblasmaschinen sind häufig mit einem Transportmittel versehen, meist in Form eines Blasrades, das eine Vielzahl von Blasstationen trägt. Jede Blasstation enthält Formträger, Formträgerschalen und/oder Formen, die meist Vorformlinge, sogenannte Preforms, aufnehmen, und meist am Hals (dem sogenannten Neck) halten, während die erwärmten Vorformlinge durch Einblasen von Druckluft und meist auch durch Einführen einer Reckstange vergrößert, gedehnt und an die Innenwand der Formen zum Ausbilden der gewünschten Endform angepresst werden. Dieser Prozess erfordert jedoch eine exakte Temperaturführung mit punktgenauer Erwärmung und gegebenenfalls eben solcher Abkühlung. Bei Lösungen bisheriger Art werden der Formträger, die Formträgerschale und/oder die Formen einer Streckblasmaschine in Abhängigkeit von den Prozessanforderungen zentral temperiert. Dies geschieht durch ein Heiz- und/oder Kühlmodul, das außerhalb des Blasrades angeordnet ist. Durch dieses Heiz- und/oder Kühlmodul wird ein Betriebsmedium (Öl, Wasser, sonstige Gemische) temperiert und von dem zentralen Temperiermodul über eine Drehverteilung auf das rotierende Blasrad geleitet. Die Drehverteilung besitzt eine Vielzahl von Anschlussstellen, von denen einzelne Leitungen (Zu- und Abläufe der Betriebsmedien) zu den einzelnen Formträgern, Formträgerschalen und/oder Formen (auch zur Neckkühlung) geführt werden. Die bekannte Ausgestaltung erfordert jedoch hohe Montagekosten für die Verteilschläuche und Schlauchkupplungen, Qualitäts- und Prüfkosten, Komplexitätskosten der Schläuche/Schlauchpakete sowie insbesondere einen hohen Energieaufwand für die Temperierung aufgrund der Temperaturverluste, insbesondere während des relativ langen Transports von der Temperiervorrichtung zur Blasstation. Die Komplexitätskosten sind hoch, da für jede Teilung des Blasrades unterschiedliche Schlauchpakete mit unterschiedlichen Längen zu konstruieren, einzukaufen und zu montieren sind. Dies gilt auch für das Ersatzteil- und Servicegeschäft. Da die Schläuche hohe Drücke aushalten müssen, müssen auch hier hochwertige Schläuche in ausreichender Länge verbaut werden.

Die in einem Ofen erhitzten Preforms werden in eine Blasmaschine gebracht, wo diese gereckt und mit Druckluft zu Behältern aufgeblasen werden. Die Preforms besitzen ein genau eingestelltes Temperaturprofil, um den Streckblasprozess optimal durchführen zu können. Jedoch existiert zwischen dem Austritt aus dem Ofen bis zum Einfügen in die Blasstation in Form des Platzierens in die Blasform eine Transferstrecke, die seitens der Parameter für die Temperatur der Preform nicht besonders gut kontrolliert ist. Je nach Umgebungstemperatur (die im Laufe eines Tages stark schwanken kann) kühlt die Preform in der Transferstrecke unterschiedlich ab und besitzt gegebenenfalls nicht mehr die optimale Temperatur (-verteilung) für den Streckblasprozess. Nach dem Streckblasen der Preform zu einem Behälter verbleibt der fertige Behälter in der Form. Der Vorgang des Formens des Behälters aus einer Preform benötigt nur kurze Zeit, die längere Zeit des Gesamtvorgangs geht für die Stabilisierung des Behälters in der Form mit gleichzeitigen Energieabtransport in Form von Wärme einher.

Der Erfindung liegt somit die Aufgabe zugrunde, eine Vorrichtung und ein Verfahren zum Blasformen von Behältern bereitzustellen, das kostengünstiger herzustellen und zuverlässiger zu betreiben ist.

Die Erfindung wird durch die Vorrichtung nach Anspruch 1 und das Verfahren nach Anspruch 11 gelöst.

Durch die erfindungsgemäße Ausgestaltung entfallen der komplexe Medienverteilring und die zentrale große Temperiereinheit. Der Aufwand für die Transportwege für das Betriebsmedium wird stark verringert. Durch die Verkürzung der Transportwege ist weiterhin weniger mit Energieverlusten zu rechnen. Dies wirkt sich insbesondere beim Anlauf bzw. nach dem Wiederanlaufen nach einem Maschinenstopp aus, da weniger Betriebsmedium im Umlauf ist. Dies erhöht wiederum die Reaktionszeit zur zielgerichteten Temperierung, d.h. es sind keine langen Vorlaufzeiten notwendig, um die gewünschte Temperierung an den Formen, der Formträgerschale und/oder dem Formträger einzustellen.

Vorteilhafte Weiterbildungen der Erfindung sind den Unteransprüchen zu entnehmen.

Durch die erfindungsgemäße Ausgestaltung ist es auf einfache Weise möglich, die Blasstationen unabhängig voneinander mit Betriebsmedium zu versorgen. Dabei können einzelne Blasstationen oder Gruppen von Blasstationen gezielt ab- oder angeschaltet werden. Auch ein Betrieb einzelner Blasstationen mit unterschiedlicher Temperatur ist möglich. Die Erfindung ist sowohl zur Bereitstellung von Heiz- und/oder Kühlmedium als auch zum Bereitstellen klimatisierter Blasluft einsetzbar. Anwendung kann eine solche Blasstation auch bei Linearmaschinen finden. Auch dort können die Vorteile einer dezentralen Medienversorgung, d. h. für je eine Blasstation ein Medienkreislauf mit individueller Regelung der Temperierung, genutzt werden.

Die Temperiereinrichtung kann eine zentrale Bereitstellungseinrichtung für das Betriebsmedium aufweisen, die mit dem Träger mitläuft und alle auf diesem Träger angeordnete Blasstationen versorgt.

Es ist jedoch auch möglich, jeder Blasstation oder jeder Gruppe von Blasstationen jeweils eine eigene Bereitstellungseinrichtung zuzuordnen, die nur diese bestimmte Blasstation oder diese bestimmte Gruppe von Blasstationen versorgt.

Jede Blasstation weist weiterhin einen eigenen, unabhängigen Temperier-Regelkreis auf, der dafür sorgt, dass zum einen die Blasstation bedarfsgerecht versorgt wird und zum anderen die Möglichkeit besteht, jede Blasstation mit einem anderen Betriebsmedium und/oder einer anderen Temperatur zu fahren. Dabei kann das Medium auch Umgebungsluft sein, die mittels einem dezentralen/lokalen Ventilator verteilt/verwirbelt wird, d. h. nicht in einem geschlossenen Kreislauf geführt wird.

Bevorzugt ist eine Temperaturfühleinrichtung an jeder Blasstation vorgesehen, um die Temperatur vor Ort feststellen zu können.

Besonders vorteilhaft ist die Verwendung einer Klein-Pumpe zum Verteilen des Betriebsmediums an jeder Blasstation. Derartige Pumpen sind wenig aufwändig, haben jedoch eine kurze Reaktionszeit und erlauben eine große Bandbreite an Variationsmöglichkeiten zur Temperatureinstellung.

Ausführungsbeispiele der Erfindung werden nachfolgend anhand der Zeichnungen näher erläutert. Es zeigen:
- Fig. 1: eine stark schematisierte Draufsicht auf ein erstes Ausführungsbeispiel der Erfindung,
- Fig. 2: eine stark schematisierte Draufsicht auf ein zweites Ausführungsbeispiel der Erfindung, und
- Fig. 3: eine stark schematisierte Darstellung eines dritten Ausführungsbeispiels der Erfindung.

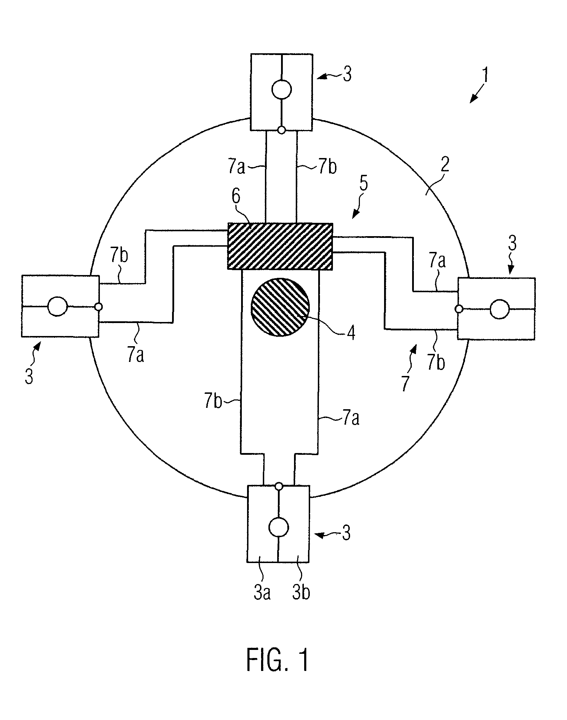

Fig. 1 zeigt in stark vereinfachter schematischer Darstellung eine Draufsicht auf eine Vorrichtung 1 zum Blasformen von Behältern, wie beispielsweise Flaschen aus Kunststoff oder dgl.. Derartige Vorrichtungen sind bekannt und müssen nicht näher erläutert werden. Blasvorrichtungen verwenden Formen mit einem der gewünschten Kontur des Behälters entsprechenden Innenraum in die ein sogenannter Preform eingesetzt wird. Der Preform wird im erwärmten Zustand durch ein in sein Inneres eingeblasenes Druckgas so aufgeweitet, dass er sich unter Ausbildung der gewünschten, dünnen Wandstärke an die Innenwand der Form anlegt. Dieser Prozess kann gegebenenfalls durch ein mechanisches Recken über eine sogenannte Reckstange unterstützt werden.

Während des Blasformens ist es notwendig, die Formen zu beheizen und gegebenenfalls, beispielsweise im Halsbereich beim sogenannten "Hotfill"-Prozess, zu kühlen. Es ist weiterhin wünschenswert, Blasluft zu klimatisieren, ebenfalls durch Temperaturerhöhung oder - erniedrigung.

Die erfindungsgemäße Vorrichtung 1 enthält einen Träger 2, der mit einer Vielzahl von Blasstationen 3 versehen ist und diese von einem nicht gezeigten Zulieferer (z.B. Ofen oder Ofenausgang) zum Einsetzen von Preforms in die Formen bis zu einem Abförderer transportiert, bei dem die fertigen Behälter entnommen werden. Zwischen Zulieferer und Abförderer findet der Blasformprozess statt.

Die Formen sind hier durch Formenhälften 3a, 3b identifiziert, können aber jede bekannte Konstruktion aufweisen.

Im dargestellten Ausführungsbeispiel ist der Träger 2 als Blasrad ausgebildet, das auf einer Welle 4 sitzt und um eine sich senkrecht zur Zeichnungsebene der Fig. 1 erstreckende Drehachse rotierend angetrieben ist.

Die Vorrichtung 1 enthält eine Temperiereinrichtung 5, die eine Bereitstellungseinrichtung 6, z.B. einen Vorrat, für wenigstens ein Betriebsmedium enthält. Die Temperiereinrichtung 5 sitzt auf dem Träger 2 und wird mit dem Träger 2 bei seiner Bewegung zwischen dem Zuförderer und dem Abförderer mitgeführt. Die Temperiereinrichtung 5 ist mit den Formen 3 über jeweils einen eigenen Betriebsmedium-Kreislauf 7 mit Zuleitung 7a und Ableitung 7b verbunden.

Die Temperiereinrichtung 5 kann jedoch auch mehrere verschiedene Betriebsmedien, wie beispielsweise ein Heizmedium, wie Wasser, Öl, oder sonstige Gemische, oder ein Kühlmittel bereitstellen. In diesem Fall ist jede Bereitstellungseinrichtung 6 jedes Betriebsmediums mit einem eigenen Kreislauf 7 mit jeder einzelnen Blasstation 3 verbunden.

Jeder Blasstation 3 ist ein nicht dargestellter Temperaturfühler zugeordnet, der ortsnah den tatsächlichen Bedarf an jeder einzelnen Blasstation 3 feststellen kann.

Der Temperaturfühler ist Bestandteil eines eigenen, unabhängigen Temperier-Regelkreises dieser bestimmten Blasstation 3, so dass jede einzelne Blasstation 3 unabhängig von den anderen Blasstationen temperiert werden kann. Selbstverständlich ist für jeden Betriebsmedium-Kreislauf ein eigener Temperier-Regelkreis vorgesehen, so dass Heiz- und Kühlerfordernisse innerhalb der gleichen Blasstation 3 voneinander abgekoppelt geregelt werden können.

Weiterhin kann für jede Formenhälfte 3a, 3b oder Formenschale oder Formträger ein eigener oder eigene Betriebsmedium-Kreisläufe vorgesehen sein.

Jeder Betriebsmedium-Kreislauf 7 wird über eine handelsübliche Klein-Pumpe mit Betriebsmedium bedient. Die Pumpe wird mit der Steuerung entsprechend des gewünschten Temperaturprofils gesteuert. Auf diese Weise ist es möglich, gezielt einzelne Temperatur-Kreisläufe aus- bzw. einzuschalten, oder gezielt die Temperatur einzelner Temperier-Kreisläufe zu einzelnen Blasstationen 3 zu verändern. Gegebenenfalls können die Blasstationen auch zu Gruppen zusammengefasst werden und jeweils gruppenweise gemeinsam geregelt werden. Wenn beispielsweise bei fünf 5 Blasstationen von 24 Stationen keine kritischen Temperaturen am Neck des Behälters festgestellt wurden, können genau diese fünf ausgeschaltet werden. Bei Verwendung der Klein-Pumpen kann die Temperatur an einzelnen Kreisläufen auf einfache und unkomplizierte Weise durch Verändern der Pumpgeschwindigkeit und somit des Betriebsmedium-Durchsatzes gezielt gesenkt und/oder erhöht werden.

Die Bereitstellungseinrichtung 6 der Temperiereinrichtung 5 kann eine übliche elektrische Heizeinrichtung aufweisen, kann jedoch auch über Brennstoffzelle (z.B. wiederbefüllbarem Methanol-Tank), Mikrowelle, Induktionsheizung oder Zuführung von Konvektionswärme/Strahlung erfolgen.

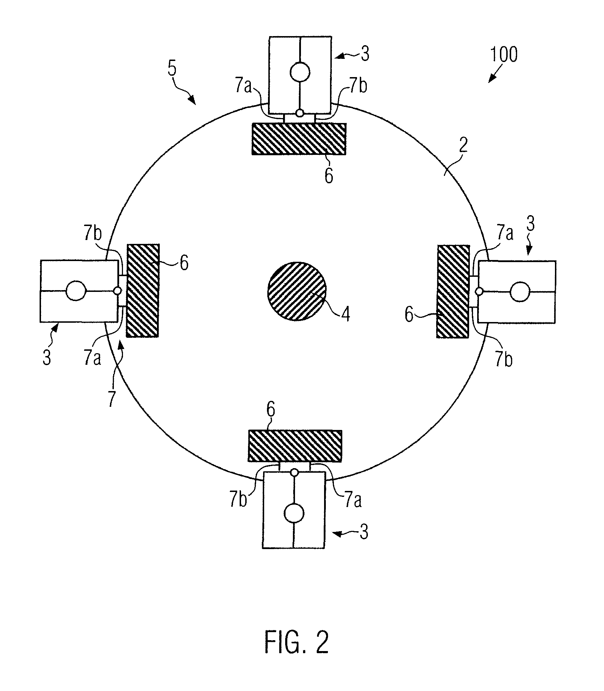

Fig. 2 zeigt ein weiteres Ausführungsbeispiel einer erfindungsgemäßen Vorrichtung 100, die sich von der Vorrichtung 1 gemäß Fig. 1 nur durch die nachfolgend beschriebenen Einzelheiten unterscheidet. Die Vorrichtung 100 enthält eine Temperiereinrichtung 5, die jeweils eine eigene Bereitstellungseinrichtung 6 für jede Blasstation und für jedes Betriebsmedium aufweist. Die Bereitstellungseinrichtung 6 ist wiederum durch jeweils wenigstens einen eigenen Kreislauf 7 mit Zuleitung 7a und Ableitung 7b mit der zugeordneten Blasstation 3 verbunden. Durch die räumliche Nähe der Bereitstellungseinrichtung 6 zur Blasstation 3 verringert sich hier der Leitungsaufwand/Schlauchaufwand weiter; unter Umständen können Zu- und Ableitung lediglich durch Bohrungen in den Formen 3a, 3b ausgebildet sein. Die Bereitstellungseinrichtung 6 kann beispielsweise ein mit Betriebsmedium gefüllter Hohlraum sein, der wiederum über eine Klein-Pumpe mit dem zugehörigen Kreislauf der zugehörigen Blasstation 3 verbunden ist. Es ist weiterhin möglich, das Betriebsmedium bei der in Fig. 2 dargestellten dezentralen Anordnung der Bereitstellungseinrichtungen in den Formträger / in die Form versiegelt einzubringen und durch Mikrowelle aufzuheizen. In diesem Fall würde gar keine Pumpe mehr zum Umwälzen des Mediums in einem Heizkreislauf erforderlich sein.

Bei der beschriebenen dezentralen Lösung auf dem Träger 2 kann die Verschlauchung als Standardbauteil in die Blasstation integriert bzw. montiert werden.

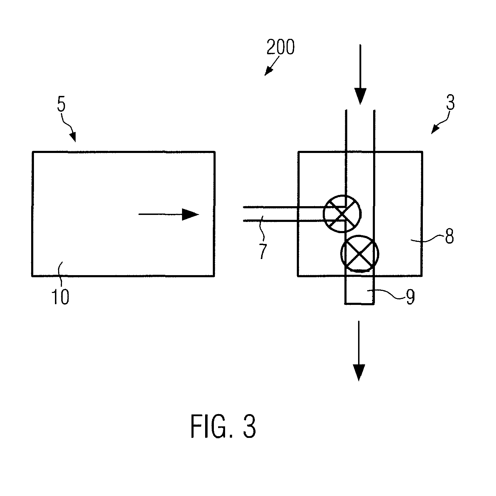

Fig. 3 zeigt ein weiteres Ausführungsbeispiel einer erfindungsgemäßen Vorrichtung 200, von der lediglich ein Ventilblock 8 als Teil der Blasform 3 dargestellt ist, der die Zufuhr von Blasluft aus der Blasluftleitung 9 steuert. An die Blasluftleitung 9 ist eine Temperiereinrichtung 5 mit einem Klimakompressor 10 angeschlossen, der über einen Kreislauf 7, hier für das Betriebsmedium Kaltluft, mit dem Ventilblock 8 zum Klimatisieren der Blasluft verbunden ist. Der Klimakompressor 10 kann sowohl in der zentralen Variante gemäß Fig. 1 als auch der dezentralen Variante der Fig. 2 zusätzlich oder alternativ zu den Bereitstellungseinrichtungen für Heiz- und/oder Kühlmedium eingesetzt werden. Bei der dezentralen Lösung kann die Verschlauchung als Standardbauteil in die Blasstation integriert bzw. montiert werden. Ist der Klimakompressor entsprechend klein/kompakt, kann auch die Verschlauchung an sich entfallen und eine Lösung realisiert werden, die keine Abkopplungsmöglichkeit in Form von Stäubli-Kupplungen benötigt, da die Form 3a, 3b direkt mit den Öffnungen des Kompressors verbunden werden kann (Klickverbindungen). Damit ist es auf einfache Weise möglich, den Bewegungen der Form bzw. der Formhälften zu folgen.

Die Temperierung mit Hilfe des Klimakompressors kann wie folgt eingesetzt werden: Der geformte Behälter kann während der Verweilzeit in der Vorrichtung 1, 100, 200 aktiv gekühlt werden. Hier kann die Kühlluft durch den Ventilblock eingeleitet werden oder es ist eine zusätzliche Bypass-Leitung vorgesehen. Der Blasluft kann durch Kaltlufteinblasung in den Druckluftkanal Wärme entzogen werden. Der Luft, die im Kompressor verdichtet wird, kann Wärme entzogen werden. Der Preform kann gezielt temperiert werden, d.h. sein Temperaturprofil kann kurz vor dem Blasen optimiert werden. Dies ist insbesondere sinnvoll für eine Kühlung des Neckrings, nachdem der Preform in die Form übergeben wurde und die Blasdüse noch nicht auf den Neckring aufgesetzt ist. Die Form kann vorab temperiert werden, wenn noch kein Behälter in der Form ist, z.B. kann sie im Hochlaufstatus der Vorrichtung vorgewärmt oder zwischengekühlt werden, falls die Form zu heiß wird, was beim "Hotfill"-Verfahren zweckmäßig ist. Auch der Neckring kann temperiert werden.

Die Steuerung des Klimakompressors kann mit Temperaturmessungen oder anderen Gegebenheiten in vorangegangenen Anlageteilen (z.B. Ofen) oder nachfolgenden Anlageteilen (z.B. Füller oder Etikettiermaschine) gekoppelt werden, wodurch stationsbezogen/blasradbezogen/ofenkettenbezogen eine genaue Zuordnung der Behälter zu den Preforms im Ofen zu ermöglichen und dadurch individuell eine Temperierung in der Blasstation möglich wird. Die Blasstationen können einzeln oder auch in Gruppen geregelt werden, bzw. einzeln oder in Gruppen mit den beschriebenen Kreisläufen verbunden sein.

In Abwandlung der beschriebenen und gezeichneten Ausführungsbeispiele kann die Erfindung auch bei Blasmaschinen mit anderer Konstruktion, z.B. mit einem linearen Träger, eingesetzt werden.

## Patentansprüche

1. Vorrichtung (1, 100, 200) zum Blasformen von Behältern mit einer Mehrzahl von mit jeweils wenigstens einer Blasform (3a, 3b) versehenen Blasstationen (3), die auf einem angetriebenen Träger (2), insbesondere einem Blasrad, angeordnet sind und über eine Temperiereinrichtung (5) mit Betriebsmedium versorgt sind, **dadurch gekennzeichnet, dass** die Temperiereinrichtung (5) auf dem Träger (2) mitlaufend angeordnet ist.

2. Vorrichtung nach Anspruch 1, **dadurch gekennzeichnet, dass** die Blasstationen (3) unabhängig voneinander mit Betriebsmedium versorgt sind.

3. Vorrichtung nach Anspruch 1 oder 2, **dadurch gekennzeichnet, dass** die Temperiereinrichtung (5) eine Bereitstellungseinrichtung (6) mit einer Heiz- und/oder Kühleinrichtung zum Bereitstellen von Heiz- und/oder Kühlmedium für die Blasform (3a, 3b) und/oder den Behälter enthält.

4. Vorrichtung nach einem der Ansprüche 1 bis 3, **dadurch gekennzeichnet, dass** die Temperiereinrichtung (5) einen Klimakompressor (10) zum Klimatisieren der Blasluft enthält.

5. Vorrichtung nach einem der Ansprüche 1 bis 4, **dadurch gekennzeichnet, dass** die Temperiereinrichtung (5) eine zentrale Bereitstellungseinrichtung (6) für das Betriebsmedium aufweist, die mit jeder Blasstation (3) verbunden ist.

6. Vorrichtung nach einem der Ansprüche 1 bis 5, **dadurch gekennzeichnet, dass** die Temperiereinrichtung (5) jeweils eine eigene Bereitstellungseinrichtung (6) für jede Blasstation (3) oder für jede Gruppe von Blasstationen enthält.

7. Vorrichtung nach einem der Ansprüche 1 bis 6, **dadurch gekennzeichnet, dass** jede Blasstation (3) für jedes Betriebsmedium einen eigenen Betriebsmedium-Kreislauf (7) aufweist.

8. Vorrichtung nach einem der Ansprüche 1 bis 7, **dadurch gekennzeichnet, dass** jede Blasstation (3) einen eigenen, unabhängigen Temperier-Regelkreis aufweist.

9. Vorrichtung nach einem der Ansprüche 1 bis 8, **dadurch gekennzeichnet, dass** die Temperiereinrichtung (5) jeder Blasstation (3) zugeordnete Temperaturfühleinrichtungen enthält.

10. Vorrichtung nach einem der Ansprüche 1 bis 9, **dadurch gekennzeichnet, dass** an jeder Blasstation wenigstens eine Klein-Pumpe zum Verteilen des Betriebsmediums vorgesehen ist.

11. Verfahren zum Blasformen von Behältern, wobei eine Mehrzahl von mit jeweils einer Blasform (3a, 3b) versehenen Blasstationen (3), die auf einem angetriebenen Träger (2), insbesondere einem Blasrad, transportiert und über eine Temperiereinrichtung (5) mit Betriebsmedium versorgt werden, **dadurch gekennzeichnet, dass** die Temperiereinrichtung (5) auf dem Träger (2) mitläuft.

12. Verfahren nach Anspruch 11, **dadurch gekennzeichnet, dass** die Blasstationen (3) unabhängig voneinander mit Betriebsmedium versorgt werden.

13. Verfahren nach Anspruch 11 oder 12, **dadurch gekennzeichnet, dass** die Versorgung der Blasstationen (3) unabhängig voneinander geregelt wird.
